# NEUE EUROPÄISCHE PATENTSCHRIFT

(11) **EP 0 082 433 B2**
(45) Veröffentlichungstag und Bekanntmachung des Hinweises auf die Entscheidung über den Einspruch: **24.01.1996**
(45) Hinweis auf die Patenterteilung: 05.03.1986
(21) Anmeldenummer: 82111429.5
(22) Anmeldetag: 09.12.1982
(51) Int. Cl.: B01D 71/44

(54) **Makroporöse asymmetrische hydrophile Membran aus synthetischem Polymerisat**
Hydrophilic asymmetrical macroporous membrane of a synthetic polymerizate
Membrane macroporeuse asymétrique hydrophile de polymère synthétique

(30) Priorität: 17.12.1981 DE 3149976
(43) Veröffentlichungstag der Anmeldung: 29.06.1983
(73) Patentinhaber: HOECHST AKTIENGESELLSCHAFT, D-65926 Frankfurt am Main (DE)
(72) Erfinder: Walch, Axel, Dr., D-6000 Frankfurt (DE); Wildhardt, Jürgen, D-6274 Hünstetten (DE); Beisel, Dieter, D-6200 Wiesbaden (DE)

(56) Entgegenhaltungen:
- DE-A- 2 633 812
- DE-A- 3 018 667
- JP-B- 789 632
- US-A- 3 615 024
- US-A- 3 775 308
- US-A- 4 051 300
- US-A- 4 051 300
- US-A- 4 229 291
- J. Applied Polymer Science, Vol. 20, S. 2377-2394 (1976)
- J. Applied Polymer Science, vol. 21, S. 165-180 (1977)
- J. Applied Polymer Science, vol. 21, S. 1883-1900 (1977)
- Prospekt der Firma GAF über PVP, Kapitel 21, S. 1-5 (1977)
- Ullmans Encyklopädie der Technischen Chemie, Band 16, S. 517 (1978)
- Encyclopedia of Polymer Science and Engineering, vol. 14, S. 246 (1971)
- Encyclopedia of Polymer Science and Engineering, vol. 17, S. 206,213 (1989)
- Elias Klein/James K. Smith, "The Use of Solubility Parameters for Solvent Selection in Asymmetric Membrane Formation", S. 61-84 in "Reverse Osmosis Membrane Research" (1972)
- van J.G. Wijmans et al., "The Mechanism of Formation of Microporous or Skinned Membranes Produced by Immersion Precipitation", Journal of Membrane Science, 14 (1983), S. 263-274
- Robert E. Kesting, "Synthetic Polymeric Membranes", S. 264-265, John Wiley & Sons (1985)
- R.A. Ward/E. Klein et al., "Response of Complement and Neutrophils to Hydrophilized Synthetic Membranes", ASAIO TRANSACTIONS, July-September, S. 334-337 (1988)

## Beschreibung

Die Erfindung betrifft makroporöse asymmetrische hydrophile Membranen aus synthetischem Polymerisat sowie Verfahren zu ihrer Herstellung.

Seit der Einführung asymmetrischer Membranen aus Celluloseacetat durch Loeb und Sourirajan (S. Sourirajan, Reverse Osmosis, Logos Press, London 1970) und aus hydrophoben Polymerisaten (US-PS 3 615 024) sind zahlreiche Membranen, insbesondere für Separationen von in Wasser gelösten nieder- und makromolekularen Bestandteilen entwickelt und vorgeschlagen worden, deren Struktur und Eignung in der Literatur angegeben (Desalination, 35 (1980), 5-20) und die auch in industrieller Praxis oder für medizinische Zwecke mit Erfolg erprobt wurden.

Viele von den beschriebenen Membranen haben zur Lösung spezifischer Aufgaben besonders vorteilhafte Eigenschaften. Eine für unterschiedliche Einsatzgebiete gleichermaßen gut verwendbare Membran steht jedoch nicht zur Verfügung, infolge ihres chemischen Aufbaus und ihrer baulichen Struktur können die beschriebenen Membranen jeweils nur für spezielle Separationsprobleme optimal geeignet sein. Hieraus resultiert die grundlegende Forderung, stets neue Membranen für neue Aufgabenstellungen zu entwickeln.

So bedingt beispielsweise die an Membranoberflächen stets auftretende Konzentrationspolarisation, die in vielen Fällen zum sogenannten 〈〈 Membranfouling 〉〉 und zur Ausbildung einer Sekundärmembran führt, daß neben der Membranstruktur, bspw. ihrem asymmetrischen Aufbau oder der Membrangeometrie, die im kapillaren oder mikroporösen Aufbau ihren Ausdruck findet, oft die qualitative und quantitative chemische Zusammensetzung des die Membran bildenden Polymerisats einen starken Einfluß auf die Eigenschaften derselben ausübt.

Relativ hydrophile Ultrafiltrationsmembranen aus Celluloseacetat eignen sich bspw. gut zur Abtrennung bestimmter Proteine aus wäßriger Lösung, da sie für diese im Kontakt mit wäßrigen Lösungen nur geringe adsorptive Eigenschaften aufweisen.

Gegen aggressive chemische Agenzien, insbesondere solche, die befähigt sind, Hydrolyse des die Membran bildenden Polymerisats zu bewirken, sind diese Membranen jedoch nicht hinreichend beständig, auch bei Einwirkung von Temperaturen oberhalb von 40 °C ändern sich die Eigenschaften dieser Membranen in unerwünschter Weise. Beide genannten Membraneigenschatten beschränken den Einsatz derartiger Membranen erheblich.

Asymmetrische hydrophobe Membranen, bspw. solche auf Basis von Polysulfon, Polyvinylidenfluorid oder anderen hydrophoben Polymerisaten haben zwar eine befriedigende Beständigkeit gegen Hydrolyse sowie höhere Temperaturen und Oxidationsmittel. Im Kontakt mit zur Belagbildung neigenden gelösten Makromolekülen, Dispersionen etc., bspw. Ölemulsionen, kataphoretische Lacke, Proteine verlieren diese Membranen jedoch häufig rasch ihre Leistung u. a. infolge Ausfällung und Adsorption von Lösungsbestandteilen auf und in der Membran.

Um diese Nachteile zu vermeiden, wurde bereits vorgeschlagen, hydrophilierte Membranen aus hydrophoben beständigen Polymerisaten zu entwickeln. Bspw. konnte durch Zusatz von Adrosilen zu Polysulfonen deren Benetzbarkeit in wäßrigen Lösungen verbessert werden. Auch wurde vorgeschlagen, Membranen aus Abmischungen von Polyvinylidenfluorid und Polyvinylacetat herzustellen ; um Membranen aus diesem Polymerisatgemisch hydrophile Eigenschaften zu verleihen, ist es jedoch erforderlich, sie einer Hydrolyse zu unterwerfen, um in ihr enthaltene Acetatgruppen in OH-Gruppen umzuwandeln. Der Versuch, hydrophile Membranen mit befriedigenden Eigenschaften dadurch herzustellen, daß man sie aus Abmischung aus einem hydrophoben Polymerisat und einem originär hydrophilen Polymerisat herstellt, bspw. aus Polyvinylidenfluorid und Polyvinylpyrrolidon, führte nicht zu dem gewünschten Erfolg, weil sich hieraus nur Membranen mit maximal 15 bis 20 Gew.-% Polyvinylpyrrolidon herstellen lassen, die aber nicht die Eigenschaften erfindungsgemäßer Erzeugnisse aufweisen.

Es ist auch vorgeschlagen worden, hydrophile Membranen dadurch herzustellen, daß man von einer Lösung von hydrophobem Polymerisat ausgeht, die bis zu 150 Gew.%, bezogen auf das Gesamtgewicht der Lösung, Polyethylenglycol enthält (Polymer-Bulletin 4, 617-622, 1981). Derartige Membranen haben jedoch keine ausreichend hydrophilen Eigenschaften, da die in ihnen enthaltene hydrophile Komponente beim Koagulationsvorgang durch die wäßrige Fällflüssigkeit aus der koagulierten Membran eluiert wird.

In der DE-OS 2 651 818 ist eine Membran beschrieben, die aus einer Mischung von Polysulfon mit sulfoniertem Polysulfon besteht. Die bekannte Membran kann bis zu 30 Gew.%, bezogen auf das Gesamtgewicht des die Membran bildenden Polymerisatgemischs, der hydrophilen Polymerisatkomponente enthalten.

Die bekannte Membran hat jedoch als lonentauschermembran den grundsätzlichen Nachteil, daß sie positive Gegenionen adsorbiert und gleichsinnige Co-ionen abstößt.

Es ist auch vorgeschlagen worden (DE-AS 2 829 630), aus hydrophobem Polymerisat eine Membran mit hydrophilen Eigenschaften dadurch herzustellen, daß man von einer Polysulfonlösung ausgeht, die niedermolekulare Salze enthält und aus dieser Lösung in an sich bekannter Weise nach dem Phaseninversionsverfahren Membranen herstellt. Die Wassersorption der bekannten Membranen ist aber unbefriedigend, weil die Salze bei der Herstellung der Membranen bzw. bei der Verwendung aus ihr entfernt werden, so daß der hydrophobe Charakter des die Membran bildenden Polymerisats deren Eigenschaften im wesentlichen bestimmt.

Eine Porenmembran, die aus einem Gemenge aus Polyvinylpyrrolidon und aromatischem Polysulfon besteht, ist in J. Appl. Pol. Sci., 21, 1883-1900 (1977) beschrieben. Diese Literatur gibt jedoch keine Lehre zur Herstellung bspw. foulingresistenter, reaktiver, biokompatibler oder für die Hämodiafiltration geeigneter Membranen. Die Autoren verwenden zwar Abmischungen mit Polyvinylpyrrolidon, allerdings mit der Aufgabenstellung, auf diese Weise hohe Viskositäten und gute faserbildende Eigenschaften zu erzielen. Sie setzen daher nur Polyvinylpyrrolidon bis zu maximalem Molekulargewicht von 40 000, vorzugsweise aber 10 000, ein, mit dem ausdrücklichen Ziel, dieses Additiv bereits während der Membranbildung im wäßrigen Fällbad zu eluieren, damit kein Polyvinylpyrrolidon in der Membran verbleibt (J. Appl. Pol. Sci. 20, 2377-2394 (1976)). Eine Membran mit spezifischen Eigenschaften gemäß der Erfindung kann somit nicht entstehen.

Zusätzlich zu der durch den Stand der Technik noch immer nicht befriedigend gelösten Aufgabe, hydrophile Membranen mit hoher Wassersorption bereitzustellen, die nur in geringem Umfang die Nachteile besitzen, die man unter dem Begriff 〈〈 Membranfouling 〉〉 zusammenfaßt, kommt die durch bekannte Membranen noch nicht gelöste Aufgabe, asymmetrisch makroporös strukturierte und hinreichend hydrophile Membranen auszubilden, die hohe Permeabilität bei befriedigender Druckstabilität und sicherer Handhabbarkeit gewährleisten. Zu den gewünschten Anforderungen der genannten Membrangattung gehören auch verbesserte Beständigkeit gegen verdünnte organische Lösungsmittel, breiteres Spektrum der Molekulargewichtsausschlußgrenze (insbesondere im Übergangsbereich der Ultrafiltration zur Mikrofiltration oder zur Hyperfiltration) und der Einsatz auf medizinischem Anwendungsgebiet, bspw. für Plasmapherese oder Hämodiafiltration. Bei der medizinischen Anwendung muß die Membran wesentlich höhere diffusive Permeabilitäten für toxische Metabolite, deren Molekülgröße unter der jeweiligen Molekulargewichtsausschlußgrenze der Membran liegt, haben, sowie gute Biokompatibilität im Kontakt mit Blut besitzen.

Es stehen zwar hydrophile Membranen mit hoher diffusiver Permeabilität zur Verfügung, bspw. gelartige Membranen aus Celluloseregenerat oder aus Polycarbonat-Blockpolymerisat, die hinreichend hohe Wasseraufnahmefähigkeit besitzen, die bekannten hydrophilen Membranen der genannten Art haben jedoch keine makroporöse, asymmetrische Struktur, die Voraussetzung dafür ist, daß zusätzlich z. B. auch hohe mechanische Permeabilität und Druckstabilität erzielt werden. Außerdem weisen diese hydrophilen Membranen wiederum nicht die Vorzüge (z. B. der chemischen Beständigkeit) hydrophober Membranen auf.

Hydrophobe Polymere sind zwar befähigt, makroporös asymmetrische Strukturen zu bilden, deren meist unzureichende Benetzbarkeit und Blutverträglichkeit, aber auch niedrige diffusive Permeabilitäten stehen jedoch bspw. dem Einsatz von Membranen aus diesem Material in der Medizin entgegen.

Der Erfindung liegt die Aufgabe zugrunde, makroporöse asymmetrische Membranen auf Basis von synthetischem Polymerisat bereitzustellen, die ausgeprägte hydrophile Eigenschaften besitzen, d. h. befähigt sind, erhebliche Mengen Wasser, bezogen auf ihr Gesamtgewicht, aufzunehmen, die gegen verseifende sowie gegen oxidative Agenzien sowie gegenüber thermischer Einwirkung beständig sind, die verdünnten organischen Lösungsmitteln besser widerstehen als Membranen aus hydrophobem Polymerisat, die eine Molekulargewichtsausschlußgrenze von größer als 100 000 Dalton, aber auch kleiner als 10 000 Dalton ermöglichen, die eine gegenüber Membranen aus hydrophobem Polymerisat verbesserte diffusive Permeabilität besitzen, gute Benetzbarkeit, Bioverträglichkeit und geringes 〈〈 Membranfouling 〉〉 aufweisen, die funktionelle Gruppen, z. B. zur Bindung bzw. Erzeugung permselektiver oder reaktiver Schichten besitzen und dennoch nach dem Phaseninversionsverfahren als druckstabile Membranen mit hoher Permeabilität hergestellt werden können.

Die der Erfindung zugrundeliegende Aufgabe wird gelöst durch eine Membran der in Anspruch 1 angegebenen Ausbildung. Vorteilhafte Weiterbildungen der Membran nach Anspruch 1 sind in den auf diesen zurückbezogenen Unteransprüchen konkretisiert.

Die gegenständliche Erfindung wird durch eine makroporöse asymmetrische Membran mit ausgeprägt hydrophilen Eigenschaften verwirklicht, die aus einem statistischen Gemenge synthetischer Polymerisate besteht, das zu 5 bis 70 Gew.% aus Polyvinylpyrrolidon mit einem Molekulargewicht ≧ 100 000 Dalton und zu 95 bis 30 Gew.% aus einem Polykondensat, ausgewählt aus einer Gruppe, umfassend Polysulfon, Polyethersulfone sowie aromatische bzw. araliphatische Polyamide, aufgebaut ist, wobei die gewichtsprozentualen Angaben sich jeweils auf das Gesamtgewicht des Polymerisatgemenges beziehen.

Unter Membranen mit ausgeprägt hydrophilen Eigenschaften sollen im Rahmen der vorliegenden Erfindung definitlonsgemäß solche verstanden werden, die bei 100 % relativer Feuchte befähigt sind, wenigstens 11 Gew.%, bezogen auf ihr Gesamtgewicht, Wasser aufzunehmen. Die Wasseraufnahmefähigkeit erfindungsgemäßer Membranen kann beispielsweise 15 bis 30 Gew.% betragen.

Membranen mit anisotropem Porenaufbau bestehen aus einer aktiven, den angestrebten Trennvorgang bewirkenden Außenschicht, die bspw. eine Dicke im Bereich von 0,2 bis 3 µm besitzt und die Poren eines Durchmessers im Bereich von 0,001 bis 0,05 µm umfaßt, bei der die Trennschicht in eine Stützschicht mit offenporigem Gefüge übergeht, deren Porengröße im Bereich von 0,05 bis 10 µm liegt.

Asymmetrische Membranen besitzen daher einen Dichtegradienten in Richtung von einer membranaußenseite zur anderen oder sind derart ausgebildet, daß ihre Dichte jeweils von einer Membranaußenseite zur Membranmitte hin abnimmt.

Eine wie angegeben porös strukturiert ausgebildete Membran wird im Rahmen der vorliegenden Erfindung als makroporöse Membran asymmetrischer Struktur bezeichnet.

Die Bezeichnungen Polysulfon sowie Polyethersulfon werden für Polymerisate verwendet, deren Molekularstruktur dadurch charakterisiert ist, daß sie aus sich wiederholenden Struktureinheiten folgender allgemeinen Formel (I) aufgebaut sind : 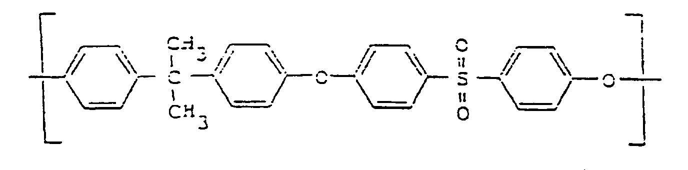
oder durch Molekülketten aus sich in diesen wiederholenden Struktureinheiten der Formel : 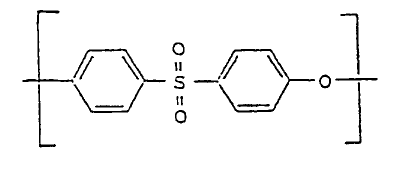
Der Ausdruck 〈〈 Polysulfon 〉〉 soll dabei im erweiterten Sinne gelten, also nicht nur Polymere, die auch Alkylgruppen in der Kette enthalten, sondern auch solche umfassen, die nur Arylgruppen in der Kette enthalten und manchmal als 〈〈 Polyarylsulfone 〉〉 bezeichnet werden.

Ein brauchbares Polysulfon ist das unter der Handelsbezeichnung 〈〈 P 1700 〉〉 erhältliche Polymer der Firma Union Carbide mit einer linearen Kette der allgemeinen Formel (I).

Derartige Polysulfone bzw. Polyäthersulfone sind *per se* bekannt und nicht Gegenstand vorliegender Erfindung.

Unter Polyamiden sollen solche Polymere verstanden werden, die durch Polykondensation von multifunktionellen Carbonsäuren (bzw. deren Derivaten) mit multifunktionellen Aminen (bzw. deren Darivaten) entstehen. Mindestens eines dieser multifunktionellen Monomeren soll aromatische Struktur aufweisen. Geeignete Polyamide sind bspw. solche, deren Molekülketten aus sich in diesen wiederholenden chemischen Struktureinheiten der Formel : 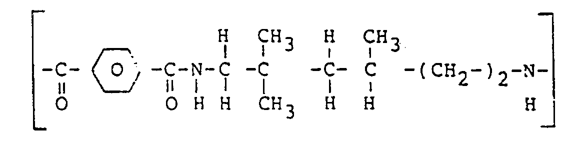
aufgebaut sind.

Die Polyamide *per se* sind nicht Gegenstand vorliegender Erfindung.

Das in der Membran vorhandene Polyvinylpyrrolidon ist durch ein Molekulargewicht von 100 000 Dalton oder ein solches von größer als 100 000 Dalton charakterisiert ; die Molekülketten des Polyvinylpyrrolidons bestehen aus sich in diesen wiederholenden Struktureinheiten der Formel : 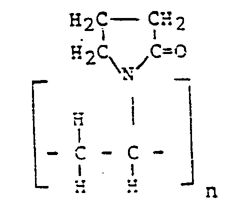
in der n > 900 ist.

Die 〉N―CO―CH₂-Gruppen des Polyvinylpyrrolidons oder die ―NH―CO-Gruppen der Polyamide werden als latent reaktionsfähige Gruppen bezeichnet, da sie unter bestimmten thermischen und/oder chemischen Bedingungen zur chemischen Reaktion bereit und befähigt sind.

Die Polymeren, welche die Membran aufbauen, können durch chemische Bindung verknüpft in dieser vorliegen ; ihre Verknüpfung geht dabei entweder darauf zurück, daß chemisch reaktive Gruppen benachbarter hochmolekularer Verbindungen bezeichneter Art miteinander in chemische Reaktion getreten sind oder daß chemisch reaktive Gruppen jeweils benachbarter hochmolekularer chemischer Verbindungen jeweils in chemische Reaktion mit reaktiven Gruppen solcher chemischer niedermolekularer Verbindungen getreten sind, die als chemische Vernetzungsmittel bezeichnet werden, weil sie befähigt sind, chemische Verknüpfung bezeichneter hochmolekularer Verbindungen zu bewirken. Zur Vernetzung bezeichneter hochmolekularer chemischer Verbindungen befähigte niedermolekulare chemische Verbindungen sind z. B. Isocyanate, Aldehyde oder Epoxide.

Das Vorhandensein von Polymerisatmolekülen in der Membran, die miteinander durch chemische Bindung verknüpft sind, führt dazu, daß derartig aufgebaute Membranen eine größere Dichte besitzen als solche, in denen die Polymerisatmoleküle verknüpfungsfrei vorliegen ; infolge der Molekülverknüpfung besitzen die besonderen Membranen herabgesetzte Trenngrenzen und infolge der Verknüfung einen hohen Anteil durch chemische Bindung fixierter Polyvinylpyrrolidonmoleküle.

Die reaktiven Gruppen der Polymeren können aber auch zur chemischen Bindung anderer Moleküle dienen. Beispielsweise können Enzyme oder Antikoagulantien an der Membran fixiert werden ; auch können weitere permselektive Schichten auf diese Weise an bzw. in der Membranoberfläche gebunden oder erzeugt werden.

Die erfindungsgemäße Membran ist durch folgende Eigenschaften bzw. Kennwerte charakterisiert :
― Hohe pH- und oxidative Beständigkeit sowie Thermostabilität, vergleichbar dem hydrophoben Polymeranteil.
― Gegenüber dem 〈〈 reinen 〉〉 hydrophoben Membranpolymer verbesserte Beständigkeit gegen verdünnte organische Lösungsmittel (z. B. Alkohole, Ketone).
― Erweiterte Molekulargewichtsausschlußgrenzen (Trenngrenzen) von größer als 100 000 Dalton (sowie kleiner als 10 000 Dalton).
― Verringertes 〈〈 Membranfouling 〉〉, sowie bessere Verträglichkeit und Benetzbarkeit mit wäßrigen Medien, z. B. gegenüber Proteinen oder dispergierten Lösungsbestandteilen (d. h. z. B. längere Membranstandzeit oder Biokompatibilität bei hoher Permselektivität).
― Fünf- bis zehnfach höhere diffusive Permeabilität im Vergleich zur hydrophoben Membran für niedermolekulare Lösungsbestandteile (z. B. Harnstoff).
― Hydrophile Funktionalisierung des hydrophoben Membranpolymers bspw. zur Bindung oder Erzeugung permselektiver oder reaktiver Schichten.
― Höhere mechanische Permeabilität und Druckstabilität gegenüber 〈〈 rein 〉〉 hydrophilen Membranen.

Eine erfindungsgemäße Membran ist bspw. wie folgt herstellbar :
In einem polaren, mit Wasser mischbaren organischen Lösungsmittel, in welchem die vorgenannten Polymerisate löslich sind, wird hochmolekulares Polyvinylpyrrolidon mit Molekulargewicht von 100 000 Dalton oder größer als 100 000 Dalton und bspw. Polysulfon jeweils in einer solchen Menge gelöst, daß die dadurch gebildete Polymerisatlösung Polyvinylpyrrolidon in einer Menge von 1 bis 20 Gew.%, und Polysulfon in einer Menge von 5 bis 50 Gew.%, jeweils bezogen auf das Gesamtgewicht der Polymerisatlösung, enthält. Als organische Lösungsmittel sind z. B. N-Methylpyrrolidon, Dimethylsulfoxid, Dimethylformamid oder Dimethylacetamid verwendbar. Gegebenenfalls wird der Lösung ein anorganisches Salz, bspw. Lithiumchlorid, in einer Menge von 1 bis 8 Gew.%, bezogen auf das Gesamtgewicht der Lösung, zugesetzt. Der angegebene Salzzusatz hat keinen Einfluß auf die erfindungsgemäß angestrebten Eigenschaften der aus bezeichneter Lösung herstellbaren Membranen. Der Zusatz von anorganischen Salzen zu Lösungen, aus denen nach dem Phaseninversionsverfahren Membranen herstellbar sind, ist in der Literatur beschrieben und *per se* nicht Gegenstand vorliegender Erfindung.

Aus der wie angegeben qualitativ und quantitativ aufgebauten Polymerisatlösung wird in bekannter Weise nach dem Phaseninversionsverfahren eine asymmetrische makroporöse Membran hergestellt. Zu diesem Zweck wird die Polymerisatlösung auf eine plane Unterlage als flüssige Schicht ausgebreitet. Die plane Unterlage kann bspw. aus einer Glasplatte bestehen.

Danach läßt man auf die flüssige Schicht Fällflüssigkeit einwirken, die mit dem Lösungsmittel der Lösung mischbar ist, in der die in der Polymerisatlösung gelösten Polymerisate aber als Membran ausgefällt werden, wobei sich auch das ursprünglich im Fällmittel lösliche Polyvinylpyrrolidon überraschenderweise 〈〈 verfestigt 〉〉. Als Fällflüssigkeit wird bspw. Wasser verwendet. Durch die Einwirkung der Fällflüssigkeit auf die flüssige Schicht aus Polymerenlösung werden die in dieser gelösten Polymerisate unter Ausbildung einer makroporösen Folie mit asymmetrischer Porenstruktur ausgefällt, die bezeichnete Polymerisate in statistischer Vertellung enthält.

Bei der Verfahrensdurchführung läßt man die Fällflüssigkeit vorteilhaft so lange auf die durch diese ausgefällte Membran einwirken, bis aus dieser praktisch das gesamte Lösungsmittel durch Fällflüssigkeit ersetzt ist. Danach wird die gebildete Membran von Fällflüssigkeit befreit, bspw. dadurch, daß man die Membran direkt in einem Luftstrom trocknet oder aber zunächst mit einem Weichmacher wie Glycerin behandelt und danach trocknet.

Zur Herstellung bezeichneter Membranen, die auf einer Trägerschicht angeordnet sind, welche für strömungsfähige Medien durchlässig ist, geht man wie vorstehend angegeben vor, verwendet jedoch als Unterlage zur Ausbildung der Membranschicht als Träger für diese ein Vlies oder Papier und beläßt nach Ausbildung der Membranschicht diese auf der Unterlage. Die Membran kann aber auch zunächst trägerfrei hergestellt und erst danach auf einen durchlässigen Träger aufgebracht werden.

In bekannter Weise sind aus der Polymerisatlösung auch Hohlfäden bzw. Kapillaren herstellbar, indem man die Polymerisatlösung nach dem Stande der Technik durch eine entsprechend ausgebildete formgebende Ringspalt- bzw. Hohlnadeldüse in Fällflüssigkeit einspinnt.

Wird die Membran danach mit Glycerin getränkt, so kann sie vorzugsweise im Bereich von 5 bis 60% Glycerin, bezogen auf ihr Gesamtgewicht, enthalten ; die derart imprägnierte Membran wird getrocknet, bspw. bei einer Temperatur von 50 °C. In Abwandlung der angegebenen Herstellungsweise kann nach folgendem Verfahren eine besondere Membran hergestellt werden : Man geht von einer wie vorstehend angegebenen Polymerisatlösung aus, die sich von der erstgenannten jedoch dadurch unterscheidet, daß sie eine zur Vernetzung befähigte chemische Verbindung enthält, deren reaktive Gruppen befähigt sind, in chemische Reaktion mit den bezeichneten reaktiven Gruppen von Polymerisatmolekülen zu treten, die in der Lösung enthalten sind. Die Polymerisatlösung kann bspw. zur Vernetzung befähigte chemische Verbindungen, in einer Menge im Bereich von 0,1 bis 15 Gew.%, bezogen auf das Gesamtgewicht der gelösten Polymerisate, enthalten. Als zur Vernetzung befähigte chemische Verbindungen sind u. a. geeignet : Aldehyde, wie bspw. Glutardialdehyd oder Formaldehyd oder Isocyanate, bspw. Toluylendiisocyanat.

Es ist auch eine Verfahrensvariante möglich, bei der man chemische Verknüpfung von Polymerisatmolekülen dadurch bewirkt, daß man, ohne dazu zur Vernetzung befähigte chemische Verbindungen einzusetzen, in der Weise vorgeht, daß die Reaktivität des Polyvinylpyrrolidons genutzt wird. Bspw. kann die Membran einer Nachbehandlung mit Radikalbildnern oder in alkalischem Medium (pH ≧ 12) bei erhöhter Temperatur unterzogen werden, um eine intermolekulare oder intramolekulare Vernetzung benachbarter Kettensegmente hochmolekularen Polyvinylpyrrolidons herbeizuführen.

Es ist auch eine Herstellungsweise der Membran möglich, bei der man zunächst die Membran in angegebener Weise herstellt und chemische Verknüpfung von in dieser enthaltenen Polymerisatmolekülen dadurch herbeiführt, daß man zur Vernetzung befähigte chemische Verbindungen der genannten Art hinreichend lange auf die Membran einwirken läßt oder aber nachträglich die vorstehend beschriebene 〈〈 Selbstvernetzung 〉〉 des Polyvinylpyrrolidons vollzieht. Entsprechende Umsetzungen sind durchführbar, um an die Membran permselektive Schichten zu binden oder direkt auf oder in der Membran zu erzeugen. So können bspw. 〈〈 ultradünne 〉〉 Schichten (≦ 1 µm) aus Polymeren mit funktionellen Gruppen (z. B. Silikone, Celluloseether, Fluorcopolymere) auf Wasser gespreitet werden, von dort auf die Membranoberfläche aufgebracht und z. B. durch Reaktion mit einem Diisocyanat kovalent fixiert werden, um somit höhere Permselektivitäten zu erzielen. Analog eignet sich die erfindungsgemäße Membran auch als Träger reaktiver Moleküle, bspw. um Enzyme oder Antikoagulantien wie Heparin nach dem Stande der Technik zu fixieren.

### Beispiele

### Beispiel 1

12 Gew.% Polysulfon (bspw. ein von der Firma Union Carbide unter der Bezeichnung 〈〈 Typ Udel 3 500 〉〉 in den Handel gebrachtes Produkt aus Bisphenol A und Dichlordiphenylsulfon) werden in einem Rührkessel gelöst (12 Stunden, Raumtemperatur), in einer Lösung von N-Methylpyrrolidon mit 6 Gew.% Polyvinylpyrrolidon (Molekulargewicht 350 000) und 4 Gew.% Lithiumchlorid. Die Polymerlösung (Viskosität 25 000 m Pa s) wird entgast und in einer Gießvorrichtung gemäß US-Patent 4 229 291 auf eine Polyethylen (spunbonded)-Trägerbahn (39 g/m²) aufgetragen und in Wasser bei 20 °C koaguliert. Die Membran wird mit einer Lösung von 40 Gew. % Glycerin getränkt und bei 50 °C getrocknet. Die trockene trägerverstärkte Membran besitzt eine Stärke von 180 µm und weist bei einer Temperatur von 25 °C eine Wasseraufnahme von 29 Gew. % auf.

### Beispiel 2

10 Gew. % Polysulfon werden gemäß Beispiel 1 in einer Lösung von N-Methylpyrrolidon mit 8 Gew. % Polyvinylpyrrolidon und 4 Gew. % Lithiumchlorid gelöst (Viskosität 45 000 m Pa s) und analog zu einer Membran koaguliert. Die trockene, trägerverstärkte Membran besitzt eine Stärke von 160 µm und weist bei einer Temperatur von 25 °C eine Wasseraufnahme von 47 Gew. % auf.

### Beispiel 3

12 Gew. % Polysulfon 3 500 werden gemäß Beispiel 1 in einer Lösung von N-Methylpyrrolidon mit 6 Gew. % Polyvinylpyrrolidon ohne Zusatz von LiCl gelöst. Die Polymerlösung (Viskosität 6 000 m Pa s) wird entgast und in einer Gießvorrichtung gemäß US-Patent 4 229 291 auf eine Polyethylenfolie (100 µm) aufgetragen und in Wasser bei 30 °C koaguliert. Die Membran wird mit einer Lösung von 40 Gew. % Glycerin getränkt, bei 60 °C getrocknet und von der Trägerfolie getrennt. Die so getrocknete, trägerfreie Membran besitzt eine Stärke von 80 µm und weist bei 25 °C eine Wasseraufnahme von 24 Gew. % auf.

### Beispiel 4

12 Gew. % Polyamid (gemäß S. 10) werden gemäß Beispiel 3 in einer Lösung von N-Methylpyrrolidon mit 6 Gew. % Polyvinylpyrrolidon gelöst und daraus eine trockene, trägerfreie Membran der Stärke 80 µm hergestellt.

### Beispiel 5

Eine Polymerlösung nach Beispiel 1 wird mittels Hohlnadelspinndüse (Außendurchmesser 600 µm, Innendurchmesser 300/100 µm) direkt in Wasser bei 30 °C koaguliert, wobei zusätzlich Wasser in das Innere der Kapillare eingeführt wird, um eine asymmetrische Struktur mit innenliegender 〈〈 Haut 〉〉 zu erzeugen. Die Kapillare hat einen Durchmesser von 550 µm bei einer Wandstärke von 85 µm.

### Beispiel 6

Die Membranen nach Beispiel 1 bis 4 werden wie folgt charakterisiert :
a. Die Wasseraufnahme wird an trägerfreien Membranen gemessen nach Lagerung bei 100 % relativer Feuchte und 25 °C bis zur Gewichtskonstanz (zuvor Trocknung der gewässerten Membran für 24 h über P₂O₅).
b. Die mechanische Permeabilität (Ultrafiltration) und der Rückhalt gegenüber gelösten Makromolekülen werden bei Drucken von 0,1 bis 3,0 bar bei 20 °C in einer gerührten zylindrischen Zelle (500 U/min, 350 ml) bestimmt (Membranfläche 43 m²). Der Rückhalt ist definiert als R = C₁ - C₂/C₁.100 % (C₁ = Konzentration der wäßrigen Lösung mit 1 Gew. % Dextran 70 000 bzw. Polyacrylsäure 20 000 bzw. Rinderalbumin (250 mg/l), C₂ = Konzentration im Permeat). Die Konzentrationsmessung erfolgt in einem digitalen Dichtemeßgerät DMA 60 + 601 (Firma Heraeus-Paar).
c. Die diffusive Permeabilität wird (gemäß O.B. Laugh und D.P. Stokesberry, National Bureau of Standards, Report No PB 179669, 1968) an trägerfreien Membranen bei 37 °C für wäßrige Lösungen von 1 500 ppm Harnstoff bzw. 1000 ppm Vitamin B₁₂ gemessen. Die Bestimmung der Konzentrationsdifferenz erfolgt kontinuierlich in einem Differential Refraktometer 〈〈 Lamidur 〉〉 (Firma Winopal).

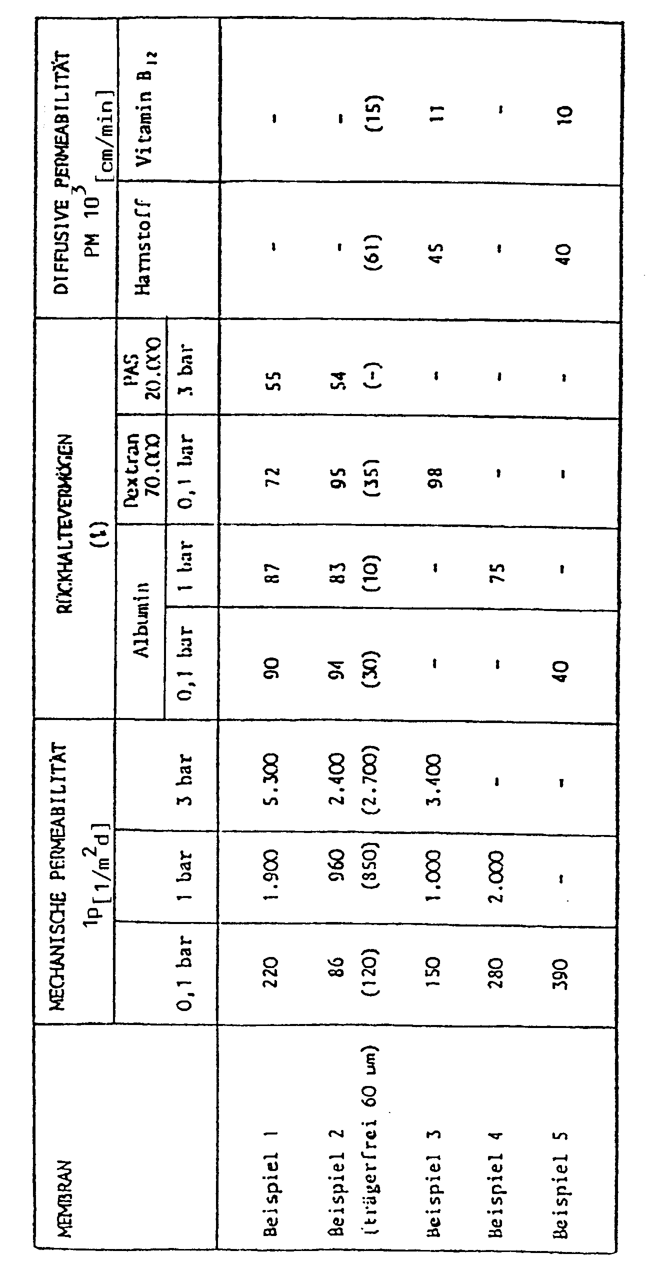

## Patentansprüche

1. Asymmetrische makroporöse Membran auf Basis von synthetischem Polymerisat, dadurch gekennzeichnet, daß sie aus einem Polymerisatgemenge besteht, das im Bereich von 5 bis 70 Gew. % aus Polyvinylpyrrolidon mit Molekulargewicht ≧ 100 000 Dalton und zu 95 bis 30 Gew. % aus Polymerem, ausgewählt aus einer Gruppe, umfassend Polysulfon, Polyethersulfon, aromatischem bzw. araliphatischem Polyamid, besteht, wobei die gewichtsprozentualen Angaben sich jeweils auf das Gesamtgewicht des angegebenen Polymerisatgemenges beziehen und die Membran eine Wasseraufnahmefähigkeit von wenigstens 11 Gew. % Wasser, bezogen auf ihr Gesamtgewicht, bei 100 % relativer Feuchte und 25 °C besitzt.

2. Membran nach Anspruch 1, dadurch gekennzeichnet, daß das sie bildende Polymerisatgemenge zu 5 bis 70 Gew. % aus Polyvinylpyrrolidon und zu 95 bis 30 Gew. % aus Polysulfon, jeweils bezogen auf das Gesamtgewicht des Polymerisatgemenges, besteht.

3. Membran nach Anspruch 1, dadurch gekennzeichnet, daß das sie bildende Polymerisatgemenge zu 5 bis 70 Gew. % aus Polyvinylpyrrolidon und zu 95 bis 30 Gew. % aus Polyethersulfon, jeweils bezogen auf das Gesamtgewicht des Polymerisatgemenges, besteht.

4. Membran nach Anspruch 1, dadurch gekennzeichnet, daß das sie bildende Polymerisatgemenge zu 5 bis 70 Gew. % aus Polyvinylpyrrolidon und zu 95 bis 30 Gew. % aromatischem bzw. araliphatischem Polyamid, jeweils bezogen auf das Gesamtgewicht des Polymerisatgemenges, besteht.

5. Membran nach Anspruch 1 bis 4, dadurch gekennzeichnet, daß Moleküle der die Membran bildenden Polymerisate durch chemische Bindung miteinander verknüpft sind.

6. Membran nach Anspruch 1 bis 4, dadurch gekennzeichnet daß permselektive oder reaktive Schichten auf oder in ihr erzeugt bzw. gebunden sind.

7. Verfahren zur Herstellung einer Membran nach Anspruch 1 bis 4, bei dem man von einer Polymerisatlösung ausgeht, die ein Polymerisatgemenge gelöst enthält und aus der Polymerisatlösung durch Einwirkung von Fällflüssigkeit eine makroporöse asymmetrische Membran ausbildet, dadurch gekennzeichnet daß man eine Polymerenlösung einsetzt, die als gelösten Anteil ein Polymerisatgemisch enthält, das zu 5 bis 70 Gew. % aus Polyvinylpyrrolidon mit Molekulargewicht ≧ 100 000 Dalton und zu 95 bis 30 Gew. % aus Polymerem, ausgewählt aus einer Gruppe umfassend Polysulfon, Polyethersulfon sowie aromatischem bzw. araliphatischem Polyamid, jeweils bezogen auf das Gesamtgewicht des gelösten Polymerisatanteils, besteht.

8. Verfahren nach Anspruch 7, dadurch gekennzeichnet, daß die Polymerisatlösung 5 bis 70 Gew. % Polyvinylpyrrolidon sowie 95 bis 30 Gew. % Polysulfon, jeweils bezogen auf das Gesamtgewicht des gelösten Polymerisatanteils, gelöst enthält.

9. Verfahren nach Anspruch 7, dadurch gekennzeichnet, daß die Polymerisatlösung 5 bis 70 Gew. % Polyvinylpyrrolidon sowie 95 bis 30 Gew. % Polyethersulfon, jeweils bezogen auf das Gesamtgewicht des gelösten Polymerisatanteils, gelöst enthält.

10. Verfahren nach Anspruch 7, dadurch gekennzeichnet, daß die Polymerisatlösung 5 bis 70 Gew. % Polyvinylpyrrolidon sowie 95 bis 30 Gew. % aromatisches bzw. araliphatisches Polyamid, jeweils bezogen auf das Gesamtgewicht des gelösten Polymerisatanteils, gelöst enthält.

11. Verfahren nach Anspruch 7 bis 9, dadurch gekennzeichnet, daß die Polymerisatlösung zur Vernetzung befähigte chemische Verbindungen in einer Menge im Bereich von 0,1 bis 15 Gew. %, bezogen auf das Gesamtgewicht des gelösten Polymerisatanteils, enthält.

12. Verfahren nach Anspruch 7 bis 9, dadurch gekennzeichnet, daß die koagulierte Membran mit zur Vernetzung befähigten chemischen Verbindungen behandelt wird.

13. Verfahren nach Anspruch 7 bis 9, dadurch gekennzeichnet, daß Polyvinylpyrrolidon vor oder nach der Koagulation der Membran durch chemisch-physikalische Katalyse vernetzt wird.

14. Verfahren nach Anspruch 7 bis 9, dadurch gekennzeichnet, daß reaktive oder permselektive Schichten in oder auf der Membran erzeugt oder gebunden werden.

## Claims

1. An asymmetrical macroporous membrane based on a synthetic polymer, which comprises a polymeric mixture which is comprised of polyvinylpyrrolidone having a molecular weight ≧ 100 000 Dalton in a range of 5-70 % by weight and of 95 to 30% by weight of a polymer selected from a group consisting of polysulfone, polyether sulfone, and aromatic or araliphatic polyamide, each of the percentages by weight being relative to the total weight of the polymeric mixture indicated and the membrane having a water absorbency of at least 11 % by weight of water, relative to its total weight, at 100 % relative humidity and 25 °C.

2. A membrane as claimed in claim 1, wherein the polymeric mixture forming it is comprised of 5-70 % by weight of polyvinylpyrrolidone and of 95-30 % by weight of polysulfone, each relative to the total weight of the polymeric mixture.

3. A membrane as claimed in claim 1, wherein the polymeric mixture forming it is comprised of 5-70 % by weight of polyvinylpyrrolidone and of 95-30 % by weight of polyether sulfone, each relative to the total weight of the polymeric mixture.

4. A membrane as claimed in claim 1, wherein the polymeric mixture forming it is comprised of 5-70 % by weight of polyvinylpyrrolidone and of 95-30 % by weight of aromatic or araliphatic polyamide, each relative to the total weight of the polymeric mixture.

5. A membrane as claimed in claims 1 to 4, wherein the molecules of the polymers forming the membrane are linked to one another by chemical bonding.

6. A membrane as claimed in claims 1 to 4, wherein permselective or reactive layers are generated or bonded on or in the membrane.

7. A process for preparing a membrane as claimed in claims 1 to 4, in which the starting material used is a polymer solution which contains a dissolved polymeric mixture and a macroporous asymmetrical membrane is formed from the polymer solution by action of a coagulating liquid, which comprises using a polymeric solution which contains as the dissolved fraction a polymeric mixture which is comprised of 5-70 % by weight of polyvinylpyrrolidone having a molecular weight of ≧ 100 000 Dalton and of 95-30 % by weight of a polymer selected from a group consisting of polysulfone, polyether sulfone and aromatic or araliphatic polyamide, each relative to the total weight of the dissolved polymeric fraction.

8. The process as claimed in claim 7, wherein the polymer solution contains in a dissolved state 5-70 % by weight of polyvinylpyrrolidone and 95-30 % by weight of polysulfone, each relative to the total weight of the dissolved polymeric fraction.

9. The process as claimed in claim 7, wherein the polymer solution contains in a dissolved state 5-70 % by weight of polyvinylpyrrolidone and 95-30 % by weight of polyathersulfone, each relative to the total weight of the dissolved polymeric fraction.

10. The process as claimed in claim 7, wherein the polymer solution contains in a dissolved state 5-70 % by weight of polyvinylpyrrolidone and 95-30 % by weight of aromatic or araliphatic polyamide, each relative to the total weight of the dissolved polymeric fraction.

11. The process as claimed in claims 7 to 9, wherein the polymer solution contains chemical compounds capable of crosslinking in an amount within a range of 0.1-15 % by weight, relative to the total weight of the dissolved polymeric fraction.

12. The process as claimed in claims 7 to 9, wherein the coagulated membrane is treated with chemical compounds capable of crosslinking.

13. The process as claimed in claims 7 to 9, wherein polyvinylpyrrolidone is crosslinked by chemicophysical catalysis before or after the coagulation of the membrane.

14. The process as claimed in claims 7 to 9, wherein reactive or permselective layers are generated or bonded in or on the membrane.

## Revendications

1. Membrane macroporeuse asymétrique en polymère synthétique, caractérisee en ce qu'elle est constituée d'un mélange de polymères, qui contient de 5 à 70 % en poids de polyvinylpyrrolidone avec une masse moléculaire ≧ 100 000 daltons et de 95 à 30 % en poids d'un polymère choisi parmi une polysulfone, une polyéthersulfone, un polyamide aromatique ou araliphatique, les indications de pourcentages en poids se rapportant dans tous les cas au poids total du mélange de polymères indiqué et la membrane ayant une capacité d'absorption d'eau d'au moins 11 % en poids, par rapport à son poids total, peur une humidité relative de 100 % et à 25 °C.

2. Membrane selon la revendication 1, caractérisée en ce que le mélange de polymères la formant est constitué de 5 à 70 % en poids de polyvinylpyrrolidone et de 95 à 30 % en poids de polysulfone, par rapport chaque fois au poids total du mélange de polymère.

3. Membrane selon la revendication 1, caractérisée en ce que le mélange de polymères la formant est constitué de 5 à 70 % en poids de polyvinylpyrrolidone et de 95 à 30 % en poids de polyéthersulfone, rapporté chaque fois au poids total du mélange de polymères.

4. Membrane selon la revendication 1, caractérisée en ce que le mélange de polymères la formant est constitué de 5 à 70 % en poids de polyvinylpyrrolidone et de 95 à 30 % en poids d'un polyamide aromatique ou araliphatique, rapporté chaque fois au poids total du mélange de polymères.

5. Membrane selon l'une quelconque des revendications 1 à 4, caractérisée en ce que les molécules des polymères formant la membrane sont reliées les unes aux autres par une liaison chimique.

6. Membrane selon la revendication 1 à 4, caractérisée en ce que des couches sélectivement perméables ou réactives sont produites ou sont liées dans ou sur la membrane.

7. Procédé de préparation d'une membrane selon l'une quelconque des revendications 1 à 4, dans lequel on part d'une solution de polymères qui contient un mélange de polymères à l'état dissous et, à partir de la solution de polymères, on forme une membrane macroporeuse asymétrique par addition d'un liquide de précipitation, caractérisé en ce qu'on utilise une solution de polymères qui contient en tant que constituant dissous un mélange de polymères constitué de 5 à 70 % en poids d'une polyvinylpyrrolidone ayant une masse moléculaire ≧ 100 000 daltons et de 95 à 30 % en poids d'un polymère choisi parmi une polysulfone, une polyéthersulfone, ou un polyamide aromatique ou araliphatique, chaque proportion étant rapportée au poids total de la fraction de polymères dissoute.

8. Procédé selon la revendication 7, caractérisé en ce que la solution de polymères contient, à l'état dissous, de 5 à 70 % en poids de polyvinylpyrrolidone et de 95 à 30 % en poids de polysulfone, rapporté dans chaque cas au poids total de la fraction de polymères dissoute.

9. Procédé selon la revendication 7, caractérisé en ce que la solution de polymères contient, à l'état dissous, de 5 à 70 % en poids de polyvinylpyrrolidone et de 95 à 30 % en poids de polyéthersulfone, rapporté chaque fois au poids total de la fraction de polymères dissoute.

10. Procédé selon la revendication 7, caractérisé en ce que la solution de polymères contient, à l'état dissous, de 5 à 70 % en poids de polyvinylpyrrolidone et de 95 à 30 % en poids d'un polyamide aromatique ou araliphatique, rapporté chaque fois au poids total de la fraction de polymères dissoute.

11. Procédé selon lune quelconque des revendications 7 à 9, caractérisé en ce que la solution de polymères contient des composés chimiques induisant une réticulation, en une quantité de 0,1 à 15 % en poids, par rapport au poids total de la fraction de polymères dissoute.

12. Procédé selon l'une quelconque des revendications 7 à 9, caractérisé en ce que la membrane coagulée est traitée avec des composés chimiques capables d'induire une réticulation.

13. Procédé selon l'une quelconque des revendications 7 à 9, caractérisé en ce que la polyvinylpyrrolidone est réticulée avant ou après la coagulation de la membrane, par une catalyse chimico-physique.

14. Procédé selon l'une quelconque des revendications 7 à 9, caractérisé en ce que des couches réactives ou sélectivement perméables sont produites ou sont liées dans ou sur la membrane.
